# EUROPÄISCHE PATENTSCHRIFT

(11) **EP 2 010 619 B1**
(45) Veröffentlichungstag und Bekanntmachung des Hinweises auf die Patenterteilung: **10.02.2010**
(21) Anmeldenummer: 07727762.2
(22) Anmeldetag: 04.04.2007
(51) Int. Cl.: C09J 7/02

(54) **BLASENFREI VERKLEBENDE KLEBESCHICHT**
BUBBLE-FREE BONDING ADHESIVE COATING
COUCHE ADHÉSIVE COLLANT SANS BULLE

(30) Priorität: 19.04.2006 DE 102006018492
(43) Veröffentlichungstag der Anmeldung: 07.01.2009
(73) Patentinhaber: TESA SE, 20253 Hamburg (DE)
(72) Erfinder: KLEINHOFF, Klaus, 31552 Rodenberg (DE); FIENCKE, Jochen, 22453 Hamburg (DE)
(86) Internationale Anmeldenummer: PCT/EP2007/053291
(87) Internationale Veröffentlichungsnummer: WO 2007/118795

(56) Entgegenhaltungen:
- EP-A1- 1 310 538
- DE-U1-202004 018 539

## Beschreibung

Die Erfindung betrifft eine blasenfrei verklebende Klebeschicht mit einer Klebemasse und einem Kanalelement, die Verwendung der Klebeschicht zum Herstellen einer blasenfreien Verklebung, die Verwendung der Klebeschicht zur Herstellung eines blasenfrei verklebenden Flächengebildes, Verfahren zur Herstellung des blasenfrei verklebenden Flächengebildes und das so hergestellte blasenfrei verklebende Flächengebilde.

Bei vielen Anwendungen gelangen flächige Klebeartikel wie etwa Klebefolien oder -bänder zum Einsatz, die auf einem Substrat bzw. Untergrund aufgebracht werden, um diesen mit anderen Elementen klebend zu verbinden, um diesen zu schützen oder zu dekorativen Zwecken. Solche Klebeartikel weisen an einer Seite oder an beiden Seiten Klebeschichten (d.h. flächige Klebeschichtungen oder Klebefilme) aus Klebemassen auf, mittels derer ein Anhaften des Klebeartikels auf dem Substrat erreicht werden soll.

Beim Verkleben der Klebeartikel kommt es jedoch häufig dazu, dass an der Klebefläche (d. h. an der Fläche der Verklebung zwischen der Klebemasse einerseits und dem Substrat andererseits) Luft eingeschlossen wird und dort als Blase verbleibt. Dies tritt insbesondere dann auf, wenn der Klebekontakt zwischen dem Klebeartikel und dem Untergrund nicht von zunächst einem einzigen Punkt oder einer ringschlusslosen Linie ausgehend dann über die gesamte Klebefläche hergestellt wird. Denn würde ein Klebekontakt in Form eines geschlossenen Kurvenzugs hergestellt, wobei die klebende Seite des Klebeartikels im Inneren dieses Kurvenzugs noch nicht in Kontakt mit dem Substrat ist, so wäre die Luft dort lokal eingeschlossen.

Eine solche Blasenbildung tritt hierbei um so häufiger auf, je größer die Klebefläche ist. Zwar lassen sich die Klebebereiche, die außerhalb des geschlossenen Kurvenzugs liegen, häufig noch blasenfrei mit dem Untergrund verkleben. Jedoch ist die im Inneren des Klebeflächenrings befindliche Luft eingeschlossen und kann auch zumeist nicht senkrecht zur Klebefläche abgeführt werden, da häufig weder die zu verklebenden Substrate noch die Trägermaterialien des Klebeartikels luftdurchlässig ausgebildet sind.

Derartige Lufteinschlüsse bzw. Luftblasen sind bei den meisten Verklebungen unerwünscht. Besonders wesentlich ist eine blasenfreie (d.h. vollflächige) Verbindung bei solchen Verklebungen, von denen eine technisch einheitliche Höhe verlangt wird (etwa beim Fixieren von Klischees in der Druckindustrie) oder bei denen die visuelle Qualität der Verklebung von Bedeutung ist (etwa bei Schutzfolien auf optischen Geräten oder bei dekorativen Abdeckungen aus Klebefolien).

Infolge der Anforderungen an die Geometrie und das Trägermaterial der Klebeartikel ist es schwierig, ein blasenfreies Verkleben bereits beim Ausbilden der Verklebung selbst zu gewährleisten. Demzufolge ist es sinnvoll, die Blasenfreiheit der Verklebung noch in einer Nachbehandlung der Verklebung erzeugen zu können, bei der die Luftblase aus der Klebefläche entfernt wird, Die häufigste Maßnahme zur Nachbehandlung stellt ein Ausstreichen der Blase dar. Hierbei wird der Lufteinschluss durch Ausüben eines Drucks auf die Oberseite der Luftblase zum Rand der Klebefläche hin bewegt. Dazu muss allerdings bereichsweise der bereits ausgebildete Klebekontakt des Bereichs um die Blase herum wieder gelöst werden, was nur bei schwachen Verklebungen gelingt. Nachteilig ist dabei, dass eine relativ große Kraft aufgewendet werden muss, um die Luftblase unter der flächigen Verklebungsfläche zum Rand zu transportieren. Für den gesamten Transport ist also ein gewaltsame "Ausstreichen" erforderlich, um den Widerstand zu überwinden, den die bereits verklebte Klebefläche dem Lufteinschluss entgegenbringt. Selbst dann kommt es aber häufig zur Beschädigung des Substrats oder des Klebeartikels (bzw. zur Inaktivierung der Klebemasse),

Zur Vereinfachung der Nachbehandlung in Form eines Ausstreichens werden daher blasenfrei verklebende Klebeartikel (d. h. Klebeartikel, die auf das Substrat aufgebracht werden und mit diesem verkleben, wobei die Verklebung ohne Nachbehandlung oder allenfalls nach einer einfachen Nachbehandlung keine in der Klebefläche eingeschlossenen Luftblasen aufweist) eingesetzt, bei denen die Klebemasse permanent durchgängige Kanäle mit geringer Querschnittfläche aufweist. Da diese Kanäle an der späteren Klebefläche liegen sollen, befinden sie sich üblicherweise an derjenigen Seite der Klebemasse, die zur Verklebung mit dem Substrat in Kontakt gebracht wird. Die Kanäle ermöglichen es, die an der Klebefläche eingeschlossene Luft zum Rand der Klebefläche hin zu leiten, ohne dass es für den Transport durch diese Kanäle erforderlich ist, eine bereits erfolgte Verbindung des Klebeartikels mit dem Substrat lokal zu lösen und nach Hindurchpressen einer Luftblase wieder zu verkleben. Der Transport durch die durchgängigen Kanäle ist demnach ein "sanftes Ausstreichen", also ein druckarmes oder sogar quasi-druckfreies Ausstreichen, bei dem nur geringer Druck aufgewendet werden muss. Die Erleichterung des Ausstreichens beruht demnach darin, dass der größte Teil der Wegstrecke, die die Luftblase entlang der Klebefläche zurückzulegen hat, widerstandsarm, d.h. mittels eines nur sanften Ausstreichens, überwunden wird. Also ist lediglich für den Transport über die kurze Wegstrecke, die die Luftblase zurücklegen muss, um den nächstgelegenen Kanal zu erreichen, noch ein gewaltsames Ausstreichen erforderlich, bei dem eine bereits entstandene Verklebung gelöst und wieder eingegangen wird. Da letztere Wegstrecke in der Regel deutlich kürzer ist als erstere Wegstrecke, ist es möglich, die bei der Verklebung aufgetretene Luftblase unter Ausübung eines insgesamt geringen Drucks zu entfernen. Die Verwendung solcher blasenfrei verklebender Klebeartikel und Verfahren zu deren Herstellung offenbart etwa die EP 0 951 518 B1 sowie die DE 20 2004 018 539 U1.

Nachteilig an derartigen Systemen ist, dass die eingesetzten Klebemassen hinreichend formbeständig sein müssen, da die Kanäle auch noch kurz nach dem Verkleben des Klebeartikels auf dem Substrat durchgängig sein müssen. Es können somit lediglich "harte" Klebemassen zum Einsatz kommen, also hochkohäsive Klebemassen mit nur geringen viskosen Anteilen, da sonst die Gefahr bestünde, dass die Kanäle infolge eines viskosen Flusses - etwa beim Andrücken des Klebeartikels auf das Substrat - permanent verschlossen werden könnten und einem Transport der Luftblasen zum Rand des Klebeartikels hin nicht mehr zugänglich wären. Derartige harte Klebemassen weisen aber häufig eine nur geringe Adhäsion und Anfassklebrigkeit auf.

Aus dem Stand der Technik (DE 198 35 919 A1) ist darüber hinaus eine Selbstklebefolie zur Verklebung von Teppichen bekannt, bei denen ein Fadengebilde in die Klebeschicht der Selbstklebefolie eingebettet ist. Das Fadengebilde dient dabei zum Erhalt der Dimensionsstabilität der Selbstklebefolie beim Verlegen und Ablösen. Das Problem der blasenfreien Verklebung besteht bei einer derartigen Selbstklebefolie nicht, da Fluid beim Verkleben jedenfalls senkrecht zur Flächenausdehnung der Klebeschicht durch den luftdurchlässigen Teppich entweichen kann.

Ferner ist aus dem Stand der Technik (DE 90 02 466 U1) ein elektrisch leitfähiges Flächengebilde bekannt, bei dem elektrische Leiter in Form von Drähten in die Klebeschicht teilweise eingebettet sind und teilweise zur Kontaktierung an der Oberfläche der Klebeschicht freiliegen. Die elektrischen Leiter sind in zwei Gruppen angeordnet, die einander kreuzen und jeweils abwechselnd über- und untereinander verlaufen.

Schließlich ist aus dem Stand der Technik (EP 1 310 538 A1) ein flächiger Klebeartikel bekannt, an dessen Oberseite eine Gitterstruktur als Schutzschicht angeordnet ist. Diese Schutzschicht dient dazu, einerseits ein unbeabsichtigtes Anhaften an einem Finger bei der Verklebung zu vermeiden sowie andererseits Ablösen nach der Verklebung zu ermöglichen.

Ziel der Erfindung ist es, eine blasenfrei verklebende Klebeschicht bereitzustellen, die die Verwendung einer Klebemasse mit hoher Adhäsion erlaubt, insbesondere die Verwendung einer druckempfindlichen Selbstklebemasse. In Verfolgung dieses Ziels haben sich die Erfinder die Aufgabe gestellt, ein Kanalelement zur Verfügung zu stellen, bei dem etwaige beim Verkleben auf dem Substrat erzeugte Lufteinschlüsse auch dann leicht entfernt werden können, wenn die Klebeschicht mit starkem Druck auf das Substrat aufgebracht wurde.

Die Aufgabe konnte überraschend gelöst werden durch die Verwendung einer blasenfrei verklebenden Klebeschicht mit einer Klebemasse und einem Kanalelement, wobei das Kanalelement ausgebildet ist, zumindest temporär einen zum Transport von Fluid angepassten Hohlraum aufzuweisen, wobei das Kanalelement hierzu ein Fadengebilde mit zumindest einem Faden umfasst, wobei das Kanalelement und das Fadengebilde im Wesentlichen parallel zur Flächenausdehnung der Klebeschicht ausgerichtet sind und wobei ein Teil der Oberfläche des Fadengebildes einen Teil der Oberfläche derjenigen Seite der Klebeschicht bildet, die die blasenfrei verklebende Klebefläche der Klebeschicht ist.

Das Fadengebilde ist also so angeordnet, dass es nicht vollumfänglich in die Klebemasse eingebettet und von dieser bedeckt ist, sondern bildet stattdessen die Oberfläche der Klebefläche selbst mit aus Zudem ist vorgesehen, dass sich das das Kanalelement und damit auch das Fadengebilde im Wesentlichen parallel zur Flächenausdehnung, also kontinuierlich entlang der Oberfläche, erstrecken, so dass ein Fluidtransport mittels des Kanalelements entlang der Oberfläche der Klebeschicht möglich ist.

Dadurch, dass ein Teil der Oberfläche des Fadengebildes einen Teil der Oberfläche derjenigen Seite der Klebeschicht bildet, die die blasenfrei verklebende Klebefläche der Klebeschicht ist, wird zusätzlich zu der erfindungsgemäßen Anpassung sichergestellt, dass der Transport über das Kanalelement in der Verklebungsebene selbst - der Klebefläche - oder zumindest unmittelbar benachbart zu dieser stattfindet, so dass eine Fluidblase an der Klebefläche nicht erst durch einen Teil der Klebeschicht hindurchgedrückt werden muss, um das Transporthohlsystem des Fadengebildes des Kanalelements zu erreichen. Eine derartige Ausbildung kann erzielt werden, indem das Fadengebilde nicht vollständig in die Klebemasse eingebettet wird, sondern zumindest ein Teil von dessen Oberfläche mit der Oberfläche der Klebemasse bündig abschließt oder sogar über diese hinausragt. Letzteres ist insbesondere für Substrate mit einer nachgiebigen bzw. weichen Oberflächenstruktur günstig.

Es wurde festgestellt, dass Fäden aus Baumwolle bereits ohne zusätzliche Anpassungsschritte einen zum Transport von Fluid geeigneten Hohlraum aufweisen, sofern sichergestellt ist, dass sie so in die Klebemasse eingefügt werden, dass die Fäden zu der Klebefläche hin nicht mit Klebemasse bedeckt sind, sondern vielmehr frei liegen.

Bei der Klebeschicht handelt es sich um eine trägerlose flächenförmige Anordnung, die als Hauptbestandteil eine Klebemasse umfasst. Eine Klebemasse enthält üblicherweise zumindest eine adhäsionserzeugende Komponente, die ihrerseits unterschiedliche Bestandteile aufweisen kann, etwa Klebharze und struktursteuernde Bestandteile wie Weichmacher, Vernetzer oder Vernetzerhilfsmittel. Die Klebemasse kann ferner Zusatzstoffe wie Färbemittel, Füllmittel oder Expander enthalten. Erfindungsgemäß ist es möglich, jede übliche Klebemasse einzusetzen, beispielsweise thermisch aktivierbare Klebemassen, jedoch gelangen bevorzugt druckempfindliche Selbstklebemassen zum Einsatz, bei denen eine Verklebung mit dem Substrat in der Regel bereits durch Ausüben eines leichten Drucks auf die Klebemasse (bzw. deren Träger) erzielt wird. Derartige druckempfindlichen Selbstklebemassen, die unmittelbar eine Verbindung mit dem Untergrund eingehen, wenn sie mit diesem in Kontakt gebracht werden, werden auch als "Haftklebemassen" (engl.: "pressure sensitive adhesives") bezeichnet. Eine solche druckempfindliche Selbstklebemasse kann beispielsweise eine Lösemittelklebemasse, Dispersionsklebemasse, aushärtende Schmelzklebemasse und/oder nichtaushärtende Schmelzklebemasse sein, wobei insbesondere Schmelzklebemassen (sog. "Hot-Melts") und solche auf der Basis von Polyacrylaten, von Elastomeren (thermoplastischen und nicht-thermoplastischen) oder von Polyurethanen (ein- oder mehrkomponentig) eingesetzt werden.

Ferner umfasst die Klebeschicht zumindest ein Kanalelement. Wird ein gasförmiges oder flüssiges Fluid wie etwa Luft oder Wasser beim Verkleben an der Klebefläche zwischen der Klebeschicht und dem Substrat eingeschlossen und bildet eine Blase, so ermöglicht es das Kanalelement, dieses Fluid vom Inneren der Klebeschicht zu dem Rand der Klebeschicht zu bewegen. Ein Transport von Fluid (d.h. die Abfuhr des Fluids) durch die Klebeschicht wird üblicherweise dadurch bewerkstelligt, dass, zwischen dem Inneren und dem Äußeren der fluidgefüllten Blase eine Druckdifferenz erzeugt wird, etwa im Form eines äußeren Druckes beim Ausstreichen, infolge der Eigenspannung der Klebeschicht (bzw. eines zusätzlichen Trägers) oder beim Anlegen eines Vakuums an das Volumen außerhalb der Blase. Infolge dieses Druckunterschieds wird das in der Blase vorhandene Fluid innerhalb des Kanalelements in Richtung zu dem Ort mit geringerem Gesamtdruck hin abgeführt. Dies hat zur Folge, dass eine beim Verkleben entstandene Fluidblase über eine Kanalstruktur auf einfache Weise aus dem Gebiet der Verklebung entfernt werden kann, da es zum Transport der Fluidblase entlang der Kanäle nicht erforderlich ist, eine bereits bestehende Verklebung der Klebeschicht mit dem Substrat zu lösen und wieder zu verkleben, wie es etwa das gewaltsame Ausstreichen verlangt. Selbstverständlich ist es auch möglich, in einer Klebeschicht mehr als ein solches Kanalelement einzubringen, um hierdurch einen besonders effizienten Transport an Fluiden zu gewährleisten.

Erfindungsgemäß umfasst das Kanalelement ein Fadengebilde. Ein derartiges Fadengebilde umfasst mindestens einen Faden, wobei der Begriff "Faden" stellvertretend für sämtliche üblichen Bezeichnungen eines flexiblen Gebildes umfasst, das im Verhältnis zu seiner Längenausdehnung eine geringe Querausdehnung aufweist, also ebenfalls Fasern, Garne, Taue, Seile, Zwirne und dergleichen, sofern diese die richtigen Abmessungen aufweisen. Ebenfalls umfasst sind beispielsweise solche Gebilde mit regelmäßigen oder unregelmäßigen Querschnitten, mit polygonalen, kreisförmigen oder sonstigen - zum Beispiel elliptischen - Querschnitten und/oder mit vollflächigen oder hohlen Querschnitten, starr oder komprimierbar.

Je nach der Menge an abzuführendem Fluid ist es hierbei günstig, wenn die Fäden als Monofilamente, also einfaserig, also monofil, ausgebildet sind. Dies bietet den Vorteil, etwaige chemische oder mechanische Modifikationen der Oberfläche, die notwendig sind, um einen Faden des Fadengebildes hinsichtlich des zumindest temporären Vorliegens eines Hohlraums anzupassen, bereits bei der Fertigung des Fadens vornehmen zu können, etwa beim Spinnen einer Kunstfaser, und so die Notwendigkeit einer zusätzlichen Nachbehandlung zu vermeiden. Derartige Monofilamente kommen insbesondere für kleine abzuführende Fluidmengen in Betracht.

Es ist aber ebenfalls günstig, die Fäden als Polyfilamente auszubilden, also mehrfaserig bzw. polyfil, wobei die einzelnen Fasern untereinander parallel ausgerichtet, verdrillt, verflochten oder dergleichen angeordnet sein können. Hierdurch ist es möglich, ein Optimum strukturbedingter Stabilität bei minimalem Materialeinsatz zu erzielen, so dass auch größere Volumina an Fluid leicht abgeführt werden können. Als Materialien für solche Fäden sind sämtliche üblichen Materialien einzusetzen, etwa natürliche Fasern wie solche aus Baumwolle, Seide und Wolle (letztere mit oder ohne Lanolin), Synthesefasern wie solche aus Rayon, Polyaramid, Nylon bzw. Polyamiden und anderen Polymeren, anorganische Fasern wie solche aus Steinwolle oder Glasfasern oder aber Kompositfasern, etwa solche aus Gemischen von Cellulose mit anderen Fasern.

Das Kanalelement ist ferner im Wesentlichen parallel zur Flächenausdehnung der Klebeschicht und damit auch zu der Klebefläche ausgerichtet. Dies bedeutet, dass die Raumstrukturen im Kanalelement so ausgerichtet sind, dass der Faden bzw. die einzelnen Fäden im wesentlichen parallel zu der Ebene angeordnet sind, in der die Verklebung der Klebeschicht auf dem Substrat erfolgt. Durch diese Anordnung wird vermieden, dass das Fluid beim Transport aus dem Inneren der Klebefläche an den Rand der Klebeschicht Wegstrecken zurücklegt, die eine Bewegung senkrecht zur Klebefläche erfordern. Hierdurch wird ein Fluidtransport aus der Klebeschicht heraus zusätzlich erleichtert.

Wesentlich für die Erfindung ist, dass das Kanalelement besonders ausgebildet ist, so dass es zumindest temporär einen zum Transport von Fluid angepassten Hohlraum aufweist, also eine Transporthohlstruktur. Als erfindungsgemäße Anpassung ist jegliche Anpassung möglich, infolge derer eine im Inneren der Klebefläche befindliche Fluidblase in einem zumindest temporär erzeugten Hohlraum entlang dem Kanalelement zum Äußeren der Klebeschicht transportiert werden kann, etwa die Verwendung einer besonderen geometrischen Struktur, einer Oberflächenmodifikation der Fäden oder aber eine Anpassung von Form und Material der Fäden in Hinblick auf die Eigenschaften der Klebemasse.

Zusätzlich muss die Anpassung aber zur Folge haben, dass der zumindest temporär erzeugte Hohlraum von der Klebefläche aus zugängig ist, so dass das Fluid von der Klebefläche direkt in den Hohlraum eindringen kann, ohne dass es hierfür direkt durch die Klebemasse selbst hindurchtreten muss. Dies kann nur dann erreicht werden, wenn das Fadengebilde an derjenigen Seite der Klebeschicht, die in der Verklebung Teil der Klebefläche ist, nicht vollständig in die Klebemasse eingebettet und von dieser bedeckt ist, sondern zumindest teilweise frei liegt. Besonders vorteilhaft ist es dabei, wenn die Fäden aus dem Fadengebilde über ihre gesamte Längsausdehnung entlang der Fadenhauptrichtung vollständig frei liegen. Eine solche Anpassung ist bei den bislang bekannten Klebebändern mit einzelnen Fäden in der Klebemasse, wie sie etwa die US 2,750,315 zur Verbesserung der strukturellen Stabilität des Klebebandes offenbart, nicht vorhanden, da hier die Fäden vollständig in die Klebemasse eingebettet von dieser umgeben sind, so dass ein Fluidtransport aus der Klebefläche heraus zu den dort etwaig vorhandenen Hohlräumen hin nicht möglich ist.

Eine gesonderte Anpassung des Kanalelements ist ferner deshalb von Bedeutung, da ohne diese Anpassung ein Fluidtransport parallel zur Klebefläche nicht oder allenfalls nur erschwert möglich ist. Werden beispielsweise polyfile Fäden in eine Klebmasse eingebettet, ohne dass diese gesondert angepasst wurden, so erhält man zwar eine Klebeschicht, die zunächst feine Hohlräume aufweist. Wird auf solche Systeme jedoch der geringste Druck ausgeübt, so kollabiert die Hohlstruktur, da Klebmasse in diese eindringt, und ein Transport von Fluiden aus der Klebefläche hinaus nicht mehr möglich ist.

Ein temporär erzeugter Hohlraum wird etwa dann gebildet, wenn die Fäden des Fadengebildes im Kanalelement so an der Oberfläche der Klebeschicht angeordnet sind, dass beim Verkleben ein Teil der Oberfläche der Fäden mit dem Substrat in Kontakt tritt, ohne aber mit dem Substrat zu verkleben. Der zum Fluidtransport geeignete Hohlraum entsteht lediglich dann, wenn eine Fluidblase entlang dem Kanalsystem des Kanalelements transportiert werden soll, und zwar lokal zwischen dem Faden und dem Substrat, wohingegen nach der Passage der Fluidmenge der Hohlraum wieder verschwunden ist. Für einen Transport von Fluid durch einen derartigen temporären Hohlraum ist es nicht erforderlich, bestehende Verklebungen zu öffnen oder wieder zu verkleben. Insofern dieser Hohlraum erst entsteht, wenn eine Verklebung mit dem Substrat erfolgt und zusätzlich eine Fluidblase bewegt wird, und nach Passage der Fluidblase nicht mehr vorhanden ist (das Kanalelement aber noch immer zum Ausbilden des Hohlraums angepasst ist), ist er temporär erzeugt. Eine erfindungsgemäße Anpassung besteht in diesem Fall darin, den an der Oberfläche der Klebeschicht angeordneten Teil der Oberfläche der Fäden derart auszurüsten, dass die Fäden selbst nicht mit dem Substrat verkleben. Ebenso ist es natürlich möglich, dass die Fäden derart ausgerüstet sind, dass die Klebemasse nicht an ihnen haftet, wodurch beim Transport eines Fluids ein temporärer Hohlraum zwischen dem Fadengebilde und der nicht am Faden haftenden Klebeschicht erfolgen könnte. Beides kann beispielsweise erreicht werden, wenn an den entsprechenden Teilen der Fäden - im ersten Fall lokal an einem Teil der Oberfläche, im zweiten Fall an der gesamten Oberfläche der Fäden - eine haftungsvermindernde . Substanz aufgetragen wird oder diese selbst dort haftungsvermindernd modifiziert wird, beispielsweise durch Silikonisieren.

Besonders bevorzugt ist es jedoch, wenn das Kanalelement ausgebildet ist, permanent einen zum Transport von Fluid angepassten Hohlraum aufzuweisen. Ein derartiger permanent vorhandener Hohlraum ist dann vorhanden, wenn die Klebeschicht an der Verklebung permanent einen Hohlraum aufweist, der nicht lediglich während der Passage des Fluids entsteht. Ein solcher permanent vorhandener Hohlraum liegt etwa dann vor, wenn die Fäden des Fadengebildes permanent vorhandene und permanent durchgängige Hohlstrukturen aufweisen, beispielsweise Hohlräume an ihrer Innenseite oder konkave Vertiefungen an ihrer Oberseite, die in der Klebeschicht frei von Klebemasse sind und so einen Fluidtransport ermöglichen. Über die Anpassung der Schicht, permanente Transporthohlstrukturen auszubilden, ist es möglich, besonders große Mengen an Fluid auf einfache Weise entlang der Klebefläche zu bewegen, beispielsweise bei besonders großen oder unregelmäßig geformten Substratoberflächen. Polyfile Naturgarne, insbesondere solche aus Baumwolle, bringen eine derartige die Fluidabfuhr fördernde Wirkung häufig ohne zusätzliche Anpassungsschritte, sofern sichergestellt ist, dass sie so in die Klebemasse eingefügt werden, dass die Fäden zu der Klebefläche hin nicht mit Klebemasse bedeckt sind, sondern vielmehr frei liegen. Daher sind Fadengebilde aus derartigen Fäden besonders bevorzugt.

Zur Umsetzung der Erfindung ist es möglich, dass das Fadengebilde aus jeweils nur einem einzigen Faden besteht. Ein einzelner Faden vermag den Transport von Fluid dadurch zu erleichtern, dass eine Fluidblase nicht mehr entlang der Klebefläche unter Lösen und Wiederverkleben der Verbindung der Klebeschicht mit dem Substrat zu drücken ist, sondern lediglich bis zu dem Faden bewegt werden muss, an dem das Fluid über die Transporthohlstruktur des Faden unter leichtem Andruck an den Rand der Schicht transportiert werden kann. Bereits bei Verwendung eines einzelnen Fadens ist das Ausstreichen einer Fluidblase, die inmitten der Klebefläche auftritt, insgesamt stark vereinfacht, da die Blase nur eine geringe Wegstrecke mittels gewaltsamen Ausstreichens bewegt werden muss, während der größte Teil der Wegstrecke unter sanftem Ausstreichen als Transport entlang des Kanalelements erfolgt.

Insbesondere beim Transport größerer Fluidmengen ist es allerdings wünschenswert, wenn die Wegstrecke, die mittels gewaltsamen Ausstreichens zu überwinden ist, so kurz wie möglich gehalten wird. Dies kann dadurch erreicht werden, dass die Dichte der Fäden pro Flächenelement erhöht wird, so dass der im Mittel zurückzulegende Weg zum nächstgelegenen Faden des Fadengebildes abnimmt. Somit ist es besonders vorteilhaft, wenn das Fadengebilde in dem Kanalelement der Klebeschicht mehrere Fäden aufweist, die parallel zueinander angeordnet sind und/oder einander kreuzen. Ein solches Fadengebilde aus mehreren Fäden ist häufig in einem lockeren Gewebe zusammengefasst, beispielsweise als Cordgewebe. Diesem steht selbstverständlich die Verwendung eines Fadengebildes aus nur einem einzelnen Faden gleich, wenn dieser Faden mehrfach über die Fläche der Klebeschicht geführt wird, etwa in parallel ausgerichteten oder in einander überkreuzenden Bahnen.

Im Falle der parallelen Fäden bzw. Fadenbahnen (sog. "Cordstellung") ist eine Anordnung mit konstantem Abstand sinnvoll. Dieser sollte aus Gründen der Verklebungsstabilität wie auch der Produktionskosten so groß wie möglich - und gleichzeitig so klein wie zu einer einfachen Fluidabfuhr nötig - gewählt werden. In der Praxis haben sich je nach Anwendung Abstände zwischen 0,7 mm und 7,0 mm als sinnvoll ergeben. So lieferte für die meisten Anwendungen ein Fadenabstand von 1,5 mm die besten Ergebnisse, für stark adhäsive Klebemassen mit einem besonders ausgeprägten Benetzungsverhalten ist dieser Abstand jedoch kleiner zu wählen.

In einer weiteren günstigen Ausbildung ist der Hohlraum jeweils an der Außenseite des zumindest einen Fadens angeordnet. Dies hat den Vorteil, dass hierbei besonders große Mengen an Fluid über das Kanalsystem des Kanalelements transportiert werden können. Eine derartige Ausbildung an der Außenseite des Fadens kann auf alle üblichen Arten bewerkstelligt werden, etwa, indem an der Oberfläche eines jeden Fadens Hohlstrukturen wie etwa konkave durchgehende Vertiefungen (wie etwa "Längsriefen"), Aussparungen oder einzelne Löcher aufgebracht werden. Dies kann entweder bereits bei der Fertigung der Fäden erfolgen - beispielsweise unter Verwendung geeigneter Extrusionsprofile oder Spinndüsen - oder aber in einer Nachbehandlung, beispielsweise chemisch mittels Ätzens oder Beschichtens, mechanisch mittels Ritzens oder Aufrauens oder mittels thermischer Abtragung. Dies umfasst natürlich ebenfalls Fäden, die aus mehreren einzelnen Filamenten aufgebaut sind, wobei sich die Hohlräume an der Oberfläche der Fäden jeweils zwischen einzelnen Filamenten eines Fadens infolge nichtperfekter Schmiegung der Filamente ergeben.

Um einerseits einen ausreichenden Fluid-Transport zu ermöglichen, andererseits aber die Klebeigenschaften nicht zu stark zur beeinträchtigen, ist in bevorzugter Ausgestaltung vorgesehen, dass die Hohlräume zum Transport des Fluids einen Durchmesser im Bereich von etwa 0,5 µm bis etwa 5 µm aufweisen, vorzugsweise im Bereich von etwa 1,5 µm bis etwa 3 µm. Je nach Anwendungsgebiet und Auswahl der Klebemasse sind aber auch andere Abmessungen möglich. Die entsprechende Ausgestaltung der Hohlräume kann dabei durch eine geeignete Auswahl des Fadengebildes erreicht werden. Bei den Hohlräumen kann es sich beispielsweise um entlang des Fadens des Fadengebildes verlaufende Riefen oder dergleichen handeln. Der Durchmesser des Hohlraums entspricht bei einer derartigen Ausgestaltung dann der Riefentiefe.

Insbesondere ist es sinnvoll, wenn sich der Hohlraum beim Aufbringen der Klebeschicht auf das Substrat jeweils zwischen der Klebeschicht und dem Substrat ausbildet. Dies wäre etwa der Fall, wenn der Hohlraum in der Klebeschicht vor dem Verkleben von Klebeschicht und Substrat noch nicht vorhanden ist, das Fadengebilde aber derart angepasst ist, dass sich der Hohlraum unmittelbar beim Verkleben der Klebeschicht auf dem Substrat ausbildet und dann permanent in der Verklebung vorliegt. Dies ist beispielsweise dann der Fall, wenn die Fäden des Fadengebildes im Kanalelement auf die hochviskose Klebemasse aufgelegt sind und nicht in diese vollständig eingebettet sind. Beim Verkleben der Klebeschicht auf dem Substrat drücken sich die Fäden dann zwar in die Klebeschicht hinein, infolge der Oberflächenspannung und Viskosität der Klebemasse wird aber zwischen den Fäden und der Klebemasse ein Hohlraum gebildet der auf einer Seite dann von dem Substrat abgeschlossen wird. Eine erfindungsgemäße Anpassung besteht in diesem Fall darin, die Oberfläche der Fäden derart auszurüsten, dass diese nur wenig von der hochviskosen Klebemasse benetzt werden und sich nur schlecht mit dieser verbinden, was etwa durch die Wahl des Materials der Fäden oder eine separate Beschichtung der Fäden erreicht werden kann. Dadurch werden die Fäden beim Einbringen in die Klebemasse nicht vollständig von der Klebemasse umgeben, und beim Verkleben kann sich eine parallel zu den Fäden an der Oberfläche ausgerichtete Doppelhohlstruktur auf beiden Seiten eines Fadens ausbilden.

Weiterhin ist es vorteilhaft, wenn der Hohlraum jeweils in dem Inneren des zumindest einen Fadens angeordnet ist. Hierbei wird eine besonders stabile Kanalstruktur in dem Kanalelement gewährleistet, die auch bei niederviskosen Klebemassen noch durchgängig bleibt. Dies lässt sich beispielsweise dann erreichen, wenn ein Faden eingesetzt wird, der innen hohl ausgebildet ist. Als solche Hohlfäden lassen sich alle üblichen innen hohlen Fäden verwenden, auch solche, die zumeist als Isolationsmaterialien eingesetzt werden, beispielsweise Hohlfasern wie Hollofil, Quallofil, Thermolite und Coolmax (jeweils DuPont) oder Thinsulate (3M) und Polarguard (Invista). Ganz besonders günstig ist es hierbei, wenn der Faden sowohl an seiner Innenseite als auch an seiner Außenseite Hohlräume aufweist, da sich hierdurch die vorteilhaften Effekte beider Ausbildungen kombinieren lassen. Eine derartige Struktur weist etwa ein aus mehreren Filamenten bestehender Faden auf, bei dem die Filamente gegeneinander verdrillt wurden. Äußere Hohlräume finden sich dort an der Außenseite zwischen den einzelnen Filamenten, wohingegen innen im Faden zwischen den einzelnen Filamenten ebenfalls Hohlräume vorliegen, die für einen Fluidtransport geeignet sein können. Dies setzt jedoch voraus, dass die Klebemasse den aus verdrillten Einzelfilamenten erzeugten Faden nicht vollständig umschließt oder zumindest nicht fest an diesem haftet, da ansonsten die erfindungswesentliche Anpassung der Fäden, zumindest temporär einen Hohlraum aufzuweisen, nicht vorliegen könnte. Insbesondere ist es dabei günstig, wenn der zumindest eine Faden senkrecht zur Fadenhauptrichtung jeweils zumindest eine Öffnung mit einer Radialkomponente aufweist, die das Äußere des Fadens mit dem Hohlraum im Inneren des Fadens verbindet. Bei einer derartigen Öffnung mit Radialkomponente handelt es sich um eine Aussparung von beliebigem Querschnitt, die nicht ausschließlich parallel Hauptrichtung eines Fadens ausgebildet ist, und die hinreichend tief ist, so dass eine Verbindung zwischen dem Äußeren des Fadens und dem Inneren des Fadens geschaffen wird. Eine solche Öffnung bietet den Vorteil, dass ein Fluid in der Klebeschicht besonders einfach in die Transporthohlstruktur des inneren Hohlraums hineingelangen kann. Diese Öffnung kann von Anfang an im Faden vorliegen, etwa bei Verwendung von Fäden aus verdrillten Einzelfilamenten, wo der Raum zwischen einzelnen Filamenten zugleich als Öffnung in den Innenraum des Fadens dienen kann, sofern die Filamentoberfläche entsprechend ausgebildet ist. Ebenfalls ist es möglich, dass die Öffnung in einer Nachbehandlung der Fäden hergestellt wird, etwa thermisch, bei einem punktuellen Perforieren von Hohlfasern mittels eines Lasers. Praktisch ist es hierbei, den Abstand dieser Radialöffnungen in Hauptrichtung das Fadens so zu wählen, dass er in einen Größenbereich fällt, der den einfachen Abstand zwischen zwei benachbarten Fäden bis zu einem Zehntel dieses Abstands umfasst.

Es ist vorteilhaft, wenn das Fadengebilde fadenkreuzungslos ausgebildet ist und der zumindest eine Faden eine Stärke zwischen 6 % und 110 % der mittleren Dicke der Klebeschicht senkrecht zu ihrer Flächenausdehnung aufweist. Ist die Stärke des Fadens geringer, so werden die Abmessungen des Hohlraums zu gering, als dass über diesen ein hinreichender Transport von Fluid noch möglich wäre. Zudem nimmt mit der Stärke der Fäden auch deren mechanische Belastbarkeit ab, so dass bei geringeren Fadendurchmessern die Gefahr eines Reißens des Fadens im Verlauf der Verarbeitung zunimmt, was unerwünschte Verzögerungen des Fertigungsprozesses zur Folge haben könnte. Auf der anderen Seite ist die Stärke des Fadens durch die mittlere Dicke der Klebeschicht senkrecht zu ihrer Flächenausdehnung begrenzt. Ist der Faden signifikant dicker als die Klebeschicht, das heißt die über die Flächenausdehnung der gesamten Klebeschicht gemittelte Dicke, wird beim Zusammenpressen ein Kontakt zwischen Klebeschicht und Substrat fast ausschließlich über das Fadengebilde erfolgen, wodurch die Klebkraft der Klebeschicht auf dem Substrat infolge der zusätzlichen Abschälkraft drastisch verringert würde. Wird hingegen die Stärke des Fadens geringer als 110 % der mittleren Dicke der Klebeschicht gewählt, so bleibt die Kontaktfläche zwischen Klebemasse in der Klebeschicht einerseits und Substrat andererseits hinreichend groß, um ein gutes Haften der Klebeschicht auf dem Untergrund sicherzustellen, insbesondere dann, wenn der Faden selbst bei leichtem Druck noch nachgibt, etwa bei Verwendung eines innen hohlen Fadens.

Ferner ist es auch günstig, wenn das Fadengebilde Fadenkreuzungen aufweist und die Fäden eine Stärke zwischen 3 % und 55 % der mittleren Dicke der Klebeschicht senkrecht zu ihrer Flächenausdehnung aufweisen. Fadenkreuzungen bedeuten dabei, dass mehrere zueinander nicht parallel verlaufende Fäden vorgesehen sind, die sich in ihrem Verlauf schneiden. Dennoch sind die Fäden jeweils im Wesentlichen parallel zu der Flächenausdehnung der Klebeschicht ausgerichtet, verlaufen also nicht hoch und runter.

Der Einsatz von verkreuzten Fäden bietet zusätzlich zu einer strukturellen Verstärkung des Kanalelements in der Klebemasse den Vorteil, dass eine Fluidblase über das Kanalsystem des Fadengebildes zum nächstgelegenen Rand der Klebeschicht auf kürzesten Wegen transportiert werden kann, da durch die Knotenpunkte eine Vielzahl kurzer Wege geschaffen wird. Dies erfordert zudem, dass das Kanalsystem insbesondere an den Kreuzungspunkten zumindest temporär durchgängig ist. Hierfür ist es notwendig, dass der Hohlraum eines Fadens mit dem des kreuzenden Fadens entweder in direktem Kontakt steht oder aber die Barriere zwischen dem Hohlraum eines Fadens und dem des kreuzenden Fadens derart gering ist, dass das Fluid beim Transport von einem Faden in einfacher Weise die Barriere überwinden und auf einen kreuzenden Faden überwechseln kann.

Um einerseits eine hinreichende mechanische Stabilität aufzuweisen, andererseits Flexibilität der Klebeschicht nicht zu sehr zu vermindern ist es darüber hinaus von Vorteil, wenn der zumindest eine Faden eine Stärke zwischen 10 µm und 60 µm aufweist.

Weiterhin ermöglicht die Erfindung eine Verwendung der obigen Klebeschicht zum Herstellen einer blasenfreien Verklebung. Hierfür wird die Klebeschicht direkt auf die Oberfläche eines Substrats aufgebracht oder aber auf ein Flächengebilde, insbesondere ein flexibles Flächengebilde wie etwa eine Klebefolie, ein Klebeband oder ein Klebeetikett, was in üblicher Weise ausgebildet sein kann, beispielsweise mit Träger oder trägerfrei (d.h. ohne separaten Träger). Insbesondere ermöglicht die Erfindung die Verwendung der Klebeschicht zum Herstellen eines derartigen blasenfrei verklebenden Flächengebildes.

Das erfindungsgemäß zur Verfügung gestellte blasenfrei verklebende Flächengebilde umfasst einen Funktionsbereich und einen Klebebereich. Solche Flächengebilde können verschieden ausgestaltet sein, beispielsweise als Band, Etikett oder Folie.

Der Klebebereich umfasst seinerseits die oben beschriebene blasenfrei verklebende Klebeschicht. Diese ist mit dem Funktionsbereich verbunden, wobei die Verbindung über beliebige Verbindungsverfahren bewerkstelligt werden kann, am einfachsten durch ein Verkleben der Klebeschicht auf dem Funktionsbereich mit derjenigen Seite der Klebeschicht, die der Klebefläche entgegengesetzt ist, oder aber durch ein gezieltes chemisches Verknüpfen des Funktionsbereichs mit dem Klebebereich, wofür der Funktionsbereich und/oder der Klebebereich durch Modifikation der Oberfläche chemisch angepasst sein können. Ein Funktionsbereich umfasst erfindungsgemäß einen Bereich, der einzelne Funktionselemente aufweist, die dem Flächengebilde eine Funktion verleihen, die über das bloße Verkleben mit dem Substrat hinausgeht.

Beispielsweise kann ein solches Funktionselement einen Träger darstellen, um dem Flächengebilde insgesamt mechanische Stabilität zu verleihen. Ein derartiger Träger kann aus beliebigen üblichen Materialien bestehen, beispielsweise aus Polymeren wie Polyester, Polypropylen, Polyethylen, Polyamid oder Polyvinylchlorid, aus Geweben, Gewirken, Gelegen, Vliesen, Papier, Schaumstoffen und dergleichen wie auch aus Laminaten dieser Materialien. Ein solcher Träger kann als permanent mit dem Klebebereich verbundener Träger ausgeführt sein, beispielsweise für herkömmliche Klebefolien und -bänder, oder aber aus einem temporären Träger bestehen, der im Gebrauch lediglich eine bestimmte Zeit mit dem Klebebereich verbunden ist, beispielsweise für das Auftragen des klebenden Flächengebildes auf ein Substrat, und danach wieder entfernt wird. Beispiele für derartige temporäre Träger sind Liner, insbesondere Prozessliner, wie sie in der Klebetechnik üblich sind, etwa silikonisierte Trennpapiere.

Ein Funktionsbereich kann darüber hinaus auch aus einem zweiten Klebebereich bestehen, etwa einem zweiten Klebebereich, dessen Klebeeigenschaften gegenüber denen des ersten Klebebereichs abgewandelt sind, um auf einem anderen, zweiten Substrat eine bessere Haftung zu erzielen. Derartige Flächengebilde können dann etwa als Transferklebebänder Verwendung finden. Selbstverständlich kann ein Funktionsbereich auch mehrere einzelne solcher Funktionselemente aufweisen, etwa einen permanenten Träger, auf dem ein zweiter Klebebereich aufgetragen ist, der von einem temporären Träger abgedeckt wird. Übliche Bestandteile solcher Funktionsbereiche stellen etwa eine oder mehrere Lagen an Folien, Geweben, Vliesen, Schaumstoffe, Depotstrukturen für bestimmte Zusatz- oder Wirkstoffe, Antihaftsysteme dar.

Schließlich stellt die Erfindung Verfahren zum Herstellen des obigen blasenfrei verklebenden Flächengebildes zur Verfügung. Eines dieser erfindungsgemäßen Verfahren umfasst die Verfahrensschritte eines Aufbringens der Klebemasse auf den Funktionsbereich und eines nachfolgenden Aufbringens des Fadengebildes auf die dem Funktionsbereich abgewandte Seite der Klebemasse. Demzufolge wird also zuerst die Klebemasse auf den Funktionsbereich aufgetragen, etwa indem diese auf einen Träger aufgestrichen wird, und anschließend wird das Fadengebilde aus zumindest einem Faden auf die nicht von dem Funktionsbereich abgedeckte Seite der Klebemasse aufgebracht. Dies Aufbringen kann in einem einfachen Auflegen bestehen, in einem teilweisen Einbetten, etwa mittels einer Andruckwalze, in einem Einbetten, etwa beim straffen Aufwickeln des Flächengebildes mit aufgelegtem Faden, wodurch der Faden in die Klebemasse eingebettet wird, oder aber nach anderen üblichen Verfahren durchgeführt werden. Die zwei Verfahrensschritte müssen nicht unmittelbar aufeinander folgen, vielmehr können dazwischen auch noch andere Verfahrensschritte stattfinden, beispielsweise ein Modifizieren der Oberfläche der Klebeschicht.

Die Erfindung umfasst das Aufbringen eines aus mehreren Fäden bestehenden Fadengebildes, jedoch ist es besonders vorteilhaft, wenn der zumindest eine Faden in vereinzelter Form auf die Klebemasse aufgebracht wird. Hierdurch ist es möglich, die Position eines jeden Fadens exakt auf der Klebemasse festzulegen und dadurch sicherzustellen, dass der Abstand zwischen benachbarten Fäden gleichmäßig und hinreichend groß ist. Auf diese Weise wird gewährleistet, dass ein Fluidtransport aus jedem Flächengebiet des Flächengebildes gleichmäßig leicht erfolgt und das Flächengebilde gleichzeitig auf dem Substrat gut haftet.

Ein weiteres erfindungsgemäßes Verfahren umfasst die Schritte eines Aufbringens des Fadengebildes auf einen temporären Träger, eines nachfolgenden Aufbringens der Klebemasse auf das Fadengebilde auf dem temporären Träger und eines nachfolgenden Aufbringens des Funktionsbereichs auf die dem temporären Träger abgewandte Seite der Klebemasse. Dies bietet insbesondere dann einen Vorteil, wenn das Flächengebilde in der Klebeschicht ein Fadengebilde mit einer individuell bestimmten Anordnung aufweisen soll und diese Anordnung aus einzelnen Fäden auf dem temporären Träger direkt aufgebaut werden soll. Ferner ist dies von Vorteil, wenn ein Flächengebilde mit einer bündig abschließenden Oberfläche erhalten werden soll, das anwendungsbedingt keine Variation in der Stärke des Flächengebildes aufweisen darf, etwa beim Fixieren von Druckplatten beim Flexodruck. Auch hier müssen die Verfahrensschritte nicht unmittelbar aufeinander folgen, vielmehr können dazwischen weitere Verfahrensschritte ausgeführt werden.

Besonders günstig ist es hierbei, wenn die Struktur des Fadengebildes in dieser Anordnung bereits beim Aufbringen auf den temporären Träger fixiert wird. Dies lässt sich etwa dann erreichen, wenn die Oberseite des temporären Trägers vor dem Aufbringen des Fadengebildes auf einer Seite haftungsverstärkend modifiziert wird und das Fadengebilde auf der haftungsverstärkend modifizierten Seite des temporären Trägers aufgebracht wird. Eine derartige Haftungsverstärkung ist notwendigerweise eine Verstärkung der Haftung der Klebemasse und des Fadengebildes auf dem temporären Träger, die insgesamt aber so gering ist, dass ein rückstandsfreies Ablösen der Klebeschicht vom temporären Träger möglich ist. Ebenfalls günstig ist es, wenn vor dem Aufbringen des Fadengebildes eine Seite des temporären Trägers haftungsvermindernd modifiziert wird und das Fadengebilde auf der nicht haftungsvermindernd modifizierten Seite des temporären Trägers aufgebracht wird. Als derartige Haftungsverminderung kommt jede Verminderung der Haftung der Klebemasse und des Fadengebildes auf dem temporären Träger in Frage. Hierdurch wird das rückstandsfreie Abwickeln eines in Rollenform aufgewickelten klebenden Flächengebildes und somit auch dessen Anwendbarkeit signifikant verbessert. Darüber hinaus kann es selbstverständlich auch von Vorteil sein, wenn beide Seiten des temporären Trägers haftungsvermindernd ausgebildet sind, wodurch zusätzlich ein gutes Ablösen des fertigen Flächengebildes vom temporären Träger erzielt werden kann. In diesem Fall kann das Fadengebilde vor dem Auftragen der Klebemasse etwa unter Spannung auf die eine haftungsvermindernd modifizierte Seite des temporären Trägers aufgelegt werden.

Nach dem Aufbringen des Fadengebildes kann dann die Klebeschicht aufgetragen werden, beispielsweise mittels Streichens oder aber mittels Zusammenführens des fadenpräparierten Trägers und einer vorher ausgebreiteten Klebeschicht mittels Andruckrolle.

Im folgenden soll die Erfindung unter Bezugnahme auf die Abbildungen näher beschrieben werden. Es zeigen hierbei
Fig. 1 einen schematischen Querschnitt durch eine Verklebung eines Substrats mit einem klebenden Flächengebilde, das einen Träger und eine Klebeschicht umfasst, die ein Kanalelement aus monofilen Fäden mit Hohlräumen an der Außenseite aufweist,
Fig. 2 einen schematischen Querschnitt durch eine weitere Ausbildung einer Verklebung eines Substrats mit einem klebenden Flächengebilde, das einen Träger und eine Klebeschicht umfasst, die ein Kanalelement aus monofilen Fäden mit Hohlräumen an der Außenseite aufweist,
Fig. 3 einen schematischen Querschnitt durch eine weitere Ausbildung einer Verklebung eines Substrats mit einem klebenden Flächengebilde, das einen Träger und eine Klebeschicht umfasst, die ein Kanalelement aus monofilen Fäden mit Hohlräumen an der Außenseite aufweist,
Fig. 4 einen schematischen Querschnitt durch eine Verklebung eines Substrats mit einem klebenden Flächengebilde, das einen Träger und eine Klebeschicht umfasst, die ein Kanalelement aus monofilen Fäden mit Hohlräumen im Inneren sowie mit zusätzlichen radialen Öffnungen aufweist,
Fig. 5 einen schematischen Querschnitt durch eine Verklebung eines Substrats mit einem klebenden Flächengebilde, das einen Träger und eine Klebeschicht umfasst, die ein Kanalelement aus monofilen Fäden mit Hohlräumen an der Außenseite und im Inneren sowie mit zusätzlichen radialen Öffnungen aufweist,
Fig. 6 einen schematischen Querschnitt durch eine Ausbildung einer Verklebung eines Substrats mit einem klebenden Flächengebilde, das einen Träger und eine Klebeschicht umfasst, die ein Kanalelement aus polyfilen Fäden mit Hohlräumen an der Außenseite und im Inneren aufweist,
Fig. 7 einen schematischen Querschnitt durch eine weitere Ausbildung einer Verklebung eines Substrats mit einem klebenden Flächengebilde, das einen Träger und eine Klebeschicht umfasst, die ein Kanalelement aus polyfilen Fäden mit Hohlräumen an der Außenseite und im Inneren aufweist,
Fig. 8 vier schematische Draufsichten auf eine Klebeschicht mit verschiedenen Ausbildungen eines fadenkreuzungslos ausgebildeten Fadengebildes und
Fig. 9 drei schematische Draufsichten auf eine Klebeschicht mit verschiedenen Ausbildungen eines Fadenkreuzungen aufweisenden Fadengebildes.

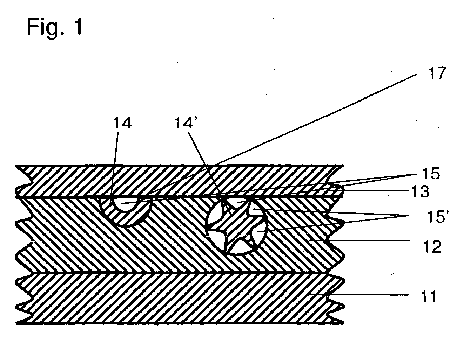

Fig. 1 zeigt ein Flächengebilde mit einem Funktionsbereich, der aus einem Träger 11 besteht, und einem Klebebereich mit einer Klebemasse 12. Das Flächengebilde ist mit einem Substrat 13 verklebt. Eingefügt in die Klebemasse 12 ist ein Kanalelement aus Fäden 14, 14'. Die Fäden 14, 14' sind als einzelne Stränge monofil ausgebildet und bestehen aus extrudierten Polymerfilamenten, denen bei der Herstellung jeweils ein besonderes Querschnittsprofil verliehen wurde. Die Fäden 14, 14' sind hierbei so einfügt, dass sie praktisch bündig mit der Außenseite der Klebemasse 12 abschließen. Die gewählten Hohlprofil der Fadenquerschnitte führen dazu, dass bei der Verkiebung oder aber bereits beim Einfügen der Fäden 14, 14' in die Klebemasse 12 an der Außenseite der Monofilamente Hohlräume 15, 15' ausgebildet werden, durch die eine Abfuhr der Fluide aus der Verklebung bewirkt werden kann. Hierfür ist der im linken Teil von Fig. 1 dargestellte Faden 14 rinnenförmig ausgebildet, wodurch beim Verkleben ein Fluidkanal 15 zwischen dem Faden 14 und dem Substrat 13 entsteht. Faden 14 ist ferner an der Kontaktfläche 17 zwischen dem Faden 14 und dem Substrat 13 haftungsvermindernd ausgebildet. Dies führt dazu, dass der Faden 14 selbst am Substrat 13 nicht klebt, so dass beim Transport einer Fluidblase über das Hohlprofil des Fadens 14 ein weiterer Hohlraum direkt an der Kontaktfläche 17 gebildet werden kann, indem sich der Faden 14 dort lokal vom Substrat 13 abhebt. Hat das transportierte Fluidvolumen das Kanalelement dann an dieser Stelle passiert, so legt sich der Faden 14 an der Kontaktfläche 17 infolge der Eigenspannung des Flächengebildes erneut an das Substrat 13 an. Demzufolge stellt dieser weitere Hohlraum also einen temporären Hohlraum dar.

Der im rechten Teil von Fig. 1 dargestellte Faden 14' hingegen weist einen unregelmäßig-sternartigen Querschnitt auf. Hier werden bereits beim Einfügen in die Klebemasse 12 eine Vielzahl an Fluidkanälen 15' ausgebildet, da aufgrund der Viskosität und Oberflächenspannung der Klebemasse 12 einerseits und den Abmessungen der "Zacken" des Sterns andererseits eine Benetzung mit Klebemasse 12 der Außenflächen des Fadens 14' zwischen den Zacken nicht erfolgt. Infolge der Ausrichtung des Fadens 14' in der Klebeschicht entsteht beim Verkleben zwischen dem Faden 14' und dem Substrat 13 ein weiterer Fluidkanal 15.

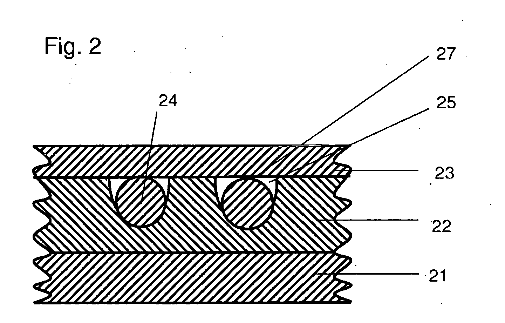

Fig. 2 zeigt ein Flächengebilde mit einem Funktionsbereich, der aus einem Träger 21 besteht, und einem Klebebereich mit einer Klebemasse 22. Das Flächengebilde ist mit einem Substrat 23 verklebt. Eingefügt in die Klebemasse 22 ist ein Kanalelement aus Fäden 24. Die Fäden 24 sind als einzelne vollflächige Stränge monofil ausgebildet. Die Fäden 24 sind so eingebettet, dass sie praktisch bündig mit der Außenseite der Klebemasse 22 abschließen, genauer gesagt mit der Außenseite der Klebemasse 22 vor dem Einlegen der Fäden 24. Beim Einlegen der Fäden 24 in die Klebemasse 22 werden Teile der Oberfläche der Fäden 24 von der Klebemasse 22 aufgrund der Viskosität und Oberflächenspannung der Klebemasse 22 einerseits und dem gewählten kreisähnlichen Querschnitt der Fäden 24 andererseits nicht benetzt. An diesen Stellen bilden sich beim Verkleben Fluidkänale 25 zwischen dem Faden 24 und dem Substrat 23 aus. Ferner ist Faden 24 an der Kontaktfläche 27 zwischen dem Faden 24 und dem Substrat 23 haftungsvermindernd ausgebildet. Dies führt dazu, dass der Faden selbst am Substrat nicht klebt, so dass beim Transport einer Fluidblase über die permanenten Fluidkanäle 25 ein weiterer Hohlraum direkt an der Kontaktfläche 27 gebildet werden kann, indem sich der Faden 24 dort lokal vom Substrat abhebt. Hat das transportierte Fluidvolumen das Kanalelement lokal an dieser Stelle passiert, so legt sich infolge der Eigenspannung des Flächengebildes der Faden 24 an der Kontaktfläche 27 erneut an das Substrat 23 an. Demzufolge stellt dieser weitere Hohlraum also ebenfalls einen temporären Hohlraum dar.

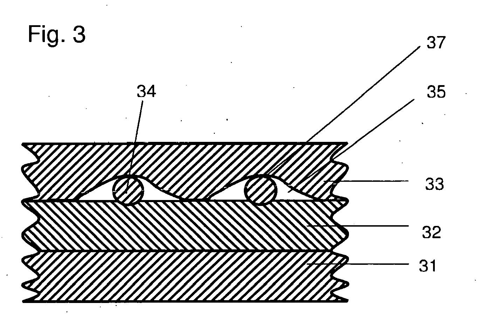

Fig. 3 zeigt eine ähnliche Ausbildung wie Fig. 2, nämlich ein Flächengebilde mit einem Träger 31 und einer Klebemasse 32 auf einem Substrat 33. In der Klebemasse 32 befinden sich monofile Fäden 34, die jedoch nicht mit der Außenseite der Klebemasse 32 vor dem Einlegen der Fäden 34 bündig abschließen, sondern über diese Außenseite hinausragen. Eine solche Ausbildung ist besonders bei Substraten von Vorteil, die zumindest im Bereich der Kontaktfläche 37 selber nicht starr sind, sondern vielmehr verformbar oder weich. Beim Einlegen der Fäden 34 in die Klebemasse 32 entstehen auch hier Fluidkänale 35 zwischen den Fäden 34 und dem Substrat 33. Überdies kann an der haftungsvermindernd ausgebildeten Kontaktfläche 37 zwischen dem Faden 34 und dem Substrat 33 temporär ein weiterer Hohlraum auftreten, wobei sich infolge der Beschaffenheit des Substrats zusätzlich auch das Substrat vom Faden abheben kann.

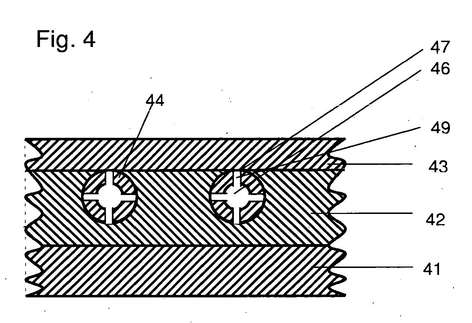

Fig. 4 zeigt ein Flächengebilde mit einem Funktionsbereich aus einem Träger 41 und einem Klebebereich mit einer Klebemasse 42. Das Flächengebilde ist mit einem Substrat 43 verklebt. Eingefügt in die Klebemasse 42 ist ein Kanalelement aus Fäden 44. Die Fäden 44 sind als einzelne Stränge monofil ausgebildet, und zwar in Form von Hohlfasern, die in ihrem Inneren einen durchgängigen Hohlraum 46 aufweisen. Dieser Hohlraum 46 ist über radiale Bohrungen 49 mit dem Bereich verbunden, der sich um den Faden 44 befindet. Die Durchmesser der Radialöffnungen 49 sind hierbei so gewählt, dass diese nicht von der jeweils verwendeten Klebmasse benetzt werden und sich somit nicht zusetzen. Zusätzlich sind die Innenseiten dieser Öffnungen haftungsvermindernd ausgebildet. Zu sehen ist in Fig. 4 ferner, dass in dieser besonderen Ausführungsform die radialen Öffnungen 49 in einer Ebene senkrecht zur Hauptachse des Fadens 44 in einem Winkel von jeweils 90 ° zueinander angeordnet sind. Eine derartige Anordnung wird hier als Öffnungskranz bezeichnet. In Hauptrichtung weist der Faden 44 mehrere voneinander beabstandete Öffnungskränze auf. Die Fäden 44 sind insgesamt so eingebettet, dass sie praktisch bündig mit der Außenseite der Klebemasse 42 vor dem Einlegen der Fäden 44 abschließen. Die Außenseite des Fadens 44 wird von der Klebemasse umschlossen, lediglich im Bereich der Kontaktfläche 47 ist die Außenseite des Fadens 44 frei von Klebmasse 42. An dieser Stelle ist der Faden 44 vielmehr haftungsvermindernd ausgebildet, so dass sich auch bei diesem System temporäre Fluidkanäle an der Kontaktfläche 47 ausbilden können.

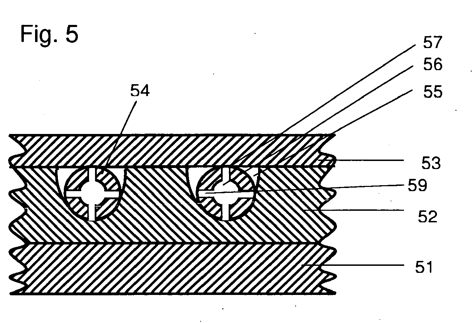

Eine zu dem in Fig. 4 dargestellten System ähnliche Ausbildung zeigt Fig. 5. In die Klebemasse 52 auf dem Träger 51 sind auch hier Hohlfasern als Fäden 54 eingefügt, die jeweils einen inneren Hohlraum 56 und Radialbohrungen 59 aufweisen. Die Fäden 54 sind ebenfalls so eingebettet, dass sie praktisch bündig mit der Außenseite der Klebemasse 52 vor dem Einlegen der Fäden 54 abschliessen. Beim Einlegen der Fäden 54 in die Klebemasse 52 werden Teile der Oberfläche der Fäden 54 von der Klebemasse 52 aufgrund der Viskosität und Oberflächenspannung der Klebemasse 52 einerseits und dem gewählten Querschnitt der Fäden 54 andererseits nicht benetzt. An diesen Stellen bilden sich beim Verkleben äußere Fluidkänale 55 zwischen dem Faden 54 und dem Substrat 53 aus. Ebenfalls kommt es hier zur Ausbildung von temporären Fluidkanälen an der nichthaftend ausgestalteten Kontaktfläche 57 zwischen dem Faden 54 und dem Substrat 53.

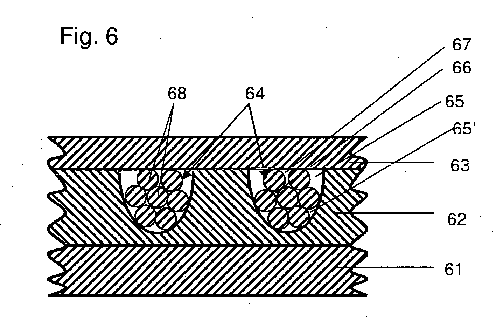

Fig. 6 zeigt ein Flächengebilde mit einem Funktionsbereich, der aus einem Träger 61 besteht, und einem Klebebereich mit einer Klebemasse 62. Das Flächengebilde ist mit einem Substrat 63 verklebt. Eingefügt in die Klebemasse 62 ist ein Kanalelement aus Fäden 64. Die Fäden 64 sind als einzelne polyfile Stränge aus jeweils mehreren Filamenten 68 ausgebildet. Infolge der Viskosität und Oberflächenspannung der Klebemasse 62 einerseits und dem gewählten polyfilen Aufbau der Fäden 64 werden die Bereiche der Außenseite der Fäden nicht benetzt, die sich nahe dem Kontaktbereich der einzelnen Filamente 68 befinden. Über die dadurch entstehenden äußeren Hohlräume 65' ist ein Fluidtransport möglich. Ferner liegen Hohlräume 66 im Inneren der Fäden vor, die nach Außen hin von den einzelnen Filamenten 68 begrenzt werden. Auch über diese Kanäle 66 ist ein Fluidtransport möglich, wobei das Fluid von außen in diese Kanäle hineingelangt, indem es temporäre Radialöffnungen zur Passage zwischen den einzelnen Filamenten schafft. Die Fäden 64 sind so in die Klebemasse 62 eingebettet, dass sie praktisch bündig mit der Außenseite der Klebemasse 62 vor dem Einlegen der Fäden 64 abschließt. Beim Einlegen der Fäden 64 in die Klebemasse 62 werden dadurch Bereiche der Oberfläche der Fäden 64 von Klebemasse frei gehalten. An diesen Stellen entstehen beim Verkleben zusätzliche äußere Fluidkänale 65 zwischen dem Faden 64 und dem Substrat 63. Ferner kommt es zur Ausbildung von temporären Fluidkanälen an der nichthaftend ausgestalteten Kontaktfläche 67 zwischen dem Faden 64 und dem Substrat 63.

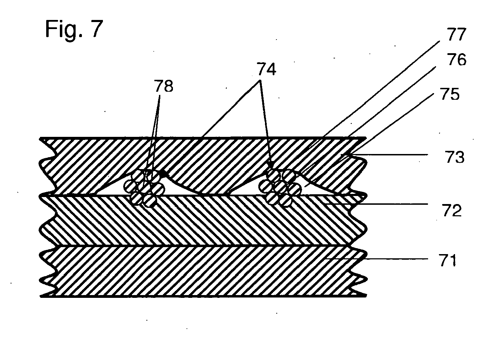

Fig. 7 zeigt eine Abwandlung des in Fig. 6 dargestellten Systems für eine Verklebung auf zumindest teilweise verformbaren bzw. nachgiebigen Substraten. Auch dieses Flächengebilde umfasst eine Klebemasse 72 auf einem Träger 71, in die Polyfilamente als Fäden 74 eingefügt sind, die jeweils innere Hohlräume 76 zwischen den einzelnen Filamenten 78 aufweisen. Die Fäden 74 sind hier jedoch so eingebettet, dass sie nur teilweise in die Klebemasse 72 eingebracht sind und daher über die Außenseite der Klebemasse 72 vor dem Einlegen der Fäden 74 hinausragen. Beim Einlegen der Fäden 74 in die Klebemasse 72 werden auch hier Bereiche der Oberfläche der Fäden 74 von Klebemasse frei gehalten. An diesen Stellen entstehen beim Verkleben äußere Fluidkänale 75 zwischen dem Faden 74 und dem Substrat 73. Ferner kommt es zur Ausbildung von temporären Fluidkanälen an der nichthaftend ausgestalteten Kontaktfläche 77 zwischen dem Faden 74 und dem nachgebenden Substrat 73.

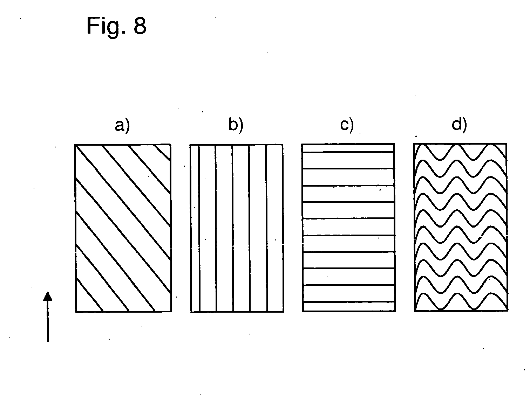

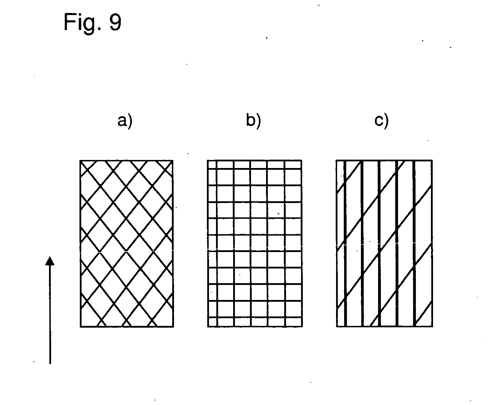

Fig. 8 und Fig. 9 zeigen Draufsichten auf Klebeschicht in mit verschiedenen Ausbildungen von Fadengebilden im Ausschnitt. Die Flächenausrichtung der Klebeschichten verläuft jeweils in der Darstellungsebene; die Produktionsrichtung ist unten links mit einem Pfeil angegeben.

In Fig. 8 sind Anordnungen dargestellt, in denen die Fäden des Fadengebildes fadenkreuzungslos angeordnet sind, und zwar jeweils in gleichmäßigem Abstand zueinander parallel. In Fig. 8 a) verlaufen die Fäden in einer Richtung schräg zur Produktionsrichtung, in Fig. 8 b) verlaufen die Fäden in Produktionsrichtung, in Fig. 8 c) verlaufen die Fäden quer zur Produktionsrichtung und in Fig. 8 d) verlaufen die Fäden in einer Wellenform, deren Vorzugrichtung quer zur Produktionsrichtung liegt.

In Fig. 9 sind Anordnungen dargestellt, in denen die Fäden des Fadengebildes mit Fadenkreuzungen ausgebildet sind. Die Fadengebilde umfassen hierbei jeweils zwei Untergitter, die in einem Winkel zueinander angeordnet sind. Die einzelnen Fäden in einem jeden Untergitter verlaufen in der gezeigten Ausbildung jeweils in gleichmäßigem Abstand zueinander parallel. Zudem verlaufen die Fäden jeweils im Wesentlichen parallel zu der Flächenausdehnung der Klebeschicht, also nicht hoch und runter. In Fig. 9 a) verlaufen die Untergitter jeweils sowohl schräg zueinander als auch schräg zur Produktionsrichtung, in Fig. 9 b) verläuft das eine Untergitter in Produktionsrichtung und das andere quer dazu, und in Fig. 9c) verläuft das eine Untergitter in Produktionsrichtung und das andere schräg dazu. Während in Fig. 9a) und b) jedes Untergitter jeweils denselben Fadenabstand aufweist, sind in Fig. 9c) die Fadenabstände beider Untergitter verschieden. Zudem sind hier die Stärken der Fadenquerschnitte beider Untergitter unterschiedlich.

Zur Verdeutlichung der Erfindung ist im folgenden rein illustrativ ein Beispiel für das erfindungsgemäße System und Verfahren zu dessen Herstellung beschrieben.

Auf eine beidseitig Corona-vorbehandelte bandförmige Trägerfolie aus Polyester (Hostaphan RN23; Mitsubishi) mit einer Stärke von 23 µm wird einseitig eine Acrylat-Haftklebemasse auf Lösungsmittelbasis mit einem Masseauftrag von 40 g(fest)/m² aufgebracht. Die Klebemasse wird danach vernetzt und getrocknet. Auf die der Trägerfolie abgewandten Seite der Klebemasse wird anschließend ein erstes Fadengebilde aus Glasfaser (EC9-34S20 2/4S; Valmieras Stikla Skiedra) parallel zur Produktionsrichtung mit einem Mittenabstand von 5 mm aufgelegt. Nun wird auf die mit dem Fadengebilde versehene Seite der Klebemasse ein beidseitig silikonisiertes Trennpapier als haftungsvermindernd ausgerüsteter temporärer Träger laminiert. Der Andruck hierfür wird so gewählt, dass die Fadengebilde zu etwa 95 % ihrer Stärke senkrecht zur Flächenausdehnung der Trägerfolie in die Haftklebemasse eingebettet werden. Auf der der Haftklebemasse abgewandten Seite der Trägerfolie wird dann eine zweite Acrylat-Haftklebemasse mit einem Masseauftrag von 20 g(fest)/m² aufgetragen. Auf diejenige Seite der zweiten Haftklebemasse, die der Trägerfolie gegenüberliegt, wird schließlich ein Polyethylenschaumstoff mit geschlossenzelliger Struktur von einer Stärke von 430 µm und einem Raumgewicht von 250 kg/m³ laminiert. Auf diese Weise wird ein laminiertes Mehrfachträgersystem auf einem Trennpapier erhalten, dessen obere Seite mit Schaumstoff bedeckt ist.

Auf ein zweites, beidseitig haftungsvermindernd ausgerüstetes silikonisiertes Trennpapier wird ein zu dem ersten Fadengebilde analoges zweites Fadengebilde parallel zur Produktionsrichtung mit einem Mittenabstand von 5 mm unter Spannung aufgelegt und in diesem Zustand mit einer dritten Acrylat-Haftklebemasse auf Lösungsmittelbasis bei einem Masseauftrag von 60 g(fest)/m² beschichtet, so dass die dem zweiten temporären Träger abgewandte Seite des zweiten Fadengebildes vollflächig bedeckt ist. Die Viskosität der Haftklebemasse ist dabei derart gewählt, dass die unvernetzte dritte Haftklebemasse das zweite Fadengebilde nicht in dem gesamten Umfang des Fadengebildes umschließt, sondern dass das zweite Fadengebilde vielmehr in direkten Kontakt zu dem Trennpapier bleibt.

Schließlich wird auf die Seite der dritten Haftklebemasse, die dem zweiten Fadengebilde abgewandt ist, die mit Schaumstoff bedeckte Seite des obigen Mehrfachträgersystems laminiert. Zuletzt wird das zweite Trennpapier entfernt und das so hergestellte funktionale Klebeband rollenförmig aufgewickelt.

## Patentansprüche

1. Blasenfrei verklebende Klebeschicht mit einer Klebemasse und einem Kanalelement,
wobei das Kanalelement ausgebildet ist, zumindest temporär einen zum Transport von Fluid angepassten Hohlraum aufzuweisen,
wobei das Kanalelement hierzu ein Fadengebilde mit zumindest einem Faden umfasst,
wobei das Kanalelement und das Fadengebilde im Wesentlichen parallel zur Flächenausdehnung der Klebeschicht ausgerichtet sind und
wobei ein Teil der Oberfläche des Fadengebildes einen Teil der Oberfläche derjenigen Seite der Klebeschicht bildet, die die blasenfrei verklebende Klebefläche der Klebeschicht ist
**dadurch gekennzeichnet,**
**dass** der Hohlraum jeweils in dem Inneren des zumindest einen Fadens angeordnet ist.

2. Klebeschicht nach Anspruch 1, **dadurch gekennzeichnet,**
**dass** der zumindest eine Faden senkrecht zur Fadenhauptrichtung jeweils zumindest eine Öffnung mit einer Radialkomponente aufweist, die das Äußere des Fadens mit dem Hohlraum im Inneren des Fadens verbindet.

3. Klebeschicht nach Anspruch 1 oder 2, **dadurch gekennzeichnet,**
**dass** der zumindest eine Faden über seine gesamte Längsausdehnung entlang der Fadenhauptrichtung vollständig frei liegt.

4. Klebeschicht nach einem der vorhergehenden Ansprüche, **dadurch gekennzeichnet,**
**dass** der zumindest eine Faden jeweils ein einziges Filament umfasst oder
**dass** der zumindest eine Faden jeweils mehrere Filamente umfasst.

5. Klebeschicht nach einem der vorhergehenden Ansprüche, **dadurch gekennzeichnet,**
**dass** das Fadengebilde mehrere Fäden umfasst,
vorzugsweise, dass das Fadengebilde Fadenkreuzungen aufweist und die Fäden eine Stärke zwischen 3 % und 55 % der mittleren Dicke der Klebeschicht senkrecht zu ihrer Flächenausdehnung aufweisen.

6. Klebeschicht nach einem der vorhergehenden Ansprüche, **dadurch gekennzeichnet,**
**dass** das Fadengebilde fadenkreuzungslos ausgebildet ist und der zumindest eine Faden eine Stärke zwischen 6 % und 110 % der mittleren Dicke der Klebeschicht senkrecht zu ihrer Flächenausdehnung aufweist.

7. Klebeschicht nach einem der vorhergehenden Ansprüche, **dadurch gekennzeichnet,**
**dass** der zumindest eine Faden eine Stärke zwischen 10 µm und 60 µm aufweist.

8. Klebeschicht nach einem der vorhergehenden Ansprüche, **dadurch gekennzeichnet,**
**dass** das Kanalelement ausgebildet ist, permanent einen zum Transport von Fluid angepassten Hohlraum aufzuweisen.

9. Verwendung einer Klebeschicht, insbesondere nach einem der vorhergehenden Ansprüche, zum Herstellen einer blasenfreien Verklebung,
wobei die blasenfrei verklebende Klebeschicht eine Klebemasse und ein Kanalelement aufweist,
wobei das Kanalelement ausgebildet ist, zumindest temporär einen zum Transport von Fluid angepassten Hohlraum aufzuweisen,
wobei das Kanalelement hierzu ein Fadengebilde mit zumindest einem Faden umfasst,
wobei das Kanalelement und das Fadengebilde im Wesentlichen parallel zur Flächenausdehnung der Klebeschicht ausgerichtet sind und
wobei ein Teil der Oberfläche des Fadengebildes einen Teil der Oberfläche derjenigen Seite der Klebeschicht bildet, die die blasenfrei verklebende Klebefläche der Klebeschicht ist,

10. Verwendung nach Anspruch 9, **dadurch gekennzeichnet,**
**dass** der Hohlraum jeweils an der Außenseite des zumindest einen Fadens angeordnet ist.

11. Verwendung nach Anspruch 10, **dadurch gekennzeichnet,**
**dass** sich der Hohlraum beim Aufbringen der Klebeschicht auf das Substrat jeweils zwischen der Klebeschicht und dem Substrat ausbildet.

12. Verwendung nach einem der Ansprüche 9 bis 11, **dadurch gekennzeichnet,**
**dass** der zumindest eine Faden über seine gesamte Längsausdehnung entlang der Fadenhauptrichtung vollständig frei liegt.

13. Verwendung nach einem der Ansprüche 9 bis 12, **dadurch gekennzeichnet,**
**dass** der zumindest eine Faden jeweils ein einziges Filament umfasst oder
**dass** der zumindest eine Faden jeweils mehrere Filamente umfasst.

14. Verwendung nach einem der Ansprüche 9 bis 13, **dadurch gekennzeichnet,**
**dass** das Fadengebilde mehrere Fäden umfasst,
vorzugsweise, dass das Fadengebilde Fadenkreuzungen aufweist und die Fäden eine Stärke zwischen 3 % und 55 % der mittleren Dicke der Klebeschicht senkrecht zu ihrer Flächenausdehnung aufweisen.

15. Verwendung nach einem der Ansprüche 9 bis 14, **dadurch gekennzeichnet,**
**dass** das Fadengebilde fadenkreuzungslos ausgebildet ist und der zumindest eine Faden eine Stärke zwischen 6 % und 110 % der mittleren Dicke der Klebeschicht senkrecht zu ihrer Flächenausdehnung aufweist.

16. Verwendung nach einem der Ansprüche 9 bis 15, **dadurch gekennzeichnet,**
**dass** der zumindest eine Faden eine Stärke zwischen 10 µm und 60 µm aufweist.

17. Verwendung nach einem der Ansprüche 9 bis 16, **dadurch gekennzeichnet,**
**dass** das Kanalelement ausgebildet ist, permanent einen zum Transport von Fluid angepassten Hohlraum aufzuweisen.

## Claims

1. Bubble-freely bonding adhesive layer with an adhesive and with a channel element,
where the channel element is so formed as to have at least temporarily a hollow space adapted for the transport of fluid,
where the channel element comprises for this purpose a thread structure with at least one thread,
where the channel element and the thread structure are oriented substantially parallel to the two-dimensional extent of the adhesive layer, and
where a part of the surface of the thread structure forms a part of the surface of the side of the adhesive layer that is the bubble-freely bonding adhesive face of the adhesive layer,
**characterized**
**in that** the hollow space is disposed in each case in the interior of the at least one thread.

2. Adhesive layer according to Claim 1, **characterized**
**in that**, perpendicularly to the principal thread direction, the at least one thread has in each case at least one opening with a radial component which joins the exterior of the thread to the hollow space in the interior of the thread.

3. Adhesive layer according to Claim 1 or 2,
**characterized in that** the at least one thread lies completely free over its entire longitudinal extent along the principal thread direction.

4. Adhesive layer according to any of the preceding claims, **characterized in that** the at least one thread comprises in each case a single filament or
**in that** the at least one thread comprises in each case two or more filaments.

5. Adhesive layer according to any of the preceding claims, **characterized in that** the thread structure comprises two or more threads, preferably **in that** the thread structure has thread crossover points and the threads have a thickness of between 3% and 55% of the average thickness of the adhesive layer perpendicularly to its two-dimensional extent.

6. Adhesive layer according to any of the preceding claims, **characterized in that** the thread structure is formed without thread crossover points and the at least one thread has a thickness of between 6% and 110% of the average thickness of the adhesive layer perpendicularly to its two-dimensional extent.

7. Adhesive layer according to any of the preceding claims, **characterized in that** the at least one thread has a thickness of between 10 µm and 60 µm.

8. Adhesive layer according to any of the preceding claims, **characterized in that** the channel element is so formed as to have permanently a hollow space adapted for the transport of fluid.

9. Use of an adhesive layer, especially according to any of the preceding claims, to produce a bubble-free bond,
where the bubble-freely bonding adhesive layer has an adhesive and has a channel element,
where the channel element is so formed as to have at least temporarily a hollow space adapted for the transport of fluid,
where the channel element comprises for this purpose a thread structure with at least one thread,
where the channel element and the thread structure are oriented substantially parallel to the two-dimensional extent of the adhesive layer, and
where a part of the surface of the thread structure forms a part of the surface of the side of the adhesive layer that is the bubble-freely bonding adhesive face of the adhesive layer.

10. Use according to Claim 9, **characterized in that** the hollow space is disposed in each case on the outside of the at least one thread.

11. Use according to Claim 10, **characterized in that** the hollow space is formed in each case between the adhesive layer and the substrate when the adhesive layer is applied to the substrate.

12. Use according to any of Claims 9 to 11, **characterized in that** the at least one thread lies completely free over its entire longitudinal extent along the principal thread direction.

13. Use according to any of Claims 9 to 1 2, **characterized in that** the at least one thread comprises in each case a single filament or **in that** the at least one thread comprises in each case two or more filaments.

14. Use according to any of Claims 9 to 13,
**characterized in that** the thread structure comprises two or more threads, preferably **in that** the thread structure has thread crossover points and the threads have a thickness of between 3% and 55% of the average thickness of the adhesive layer perpendicularly to its two-dimensional extent.

15. Use according to any of Claims 9 to 14,
**characterized in that** the thread structure is formed without thread crossover points and the at least one thread has a thickness of between 6% and 110% of the average thickness of the adhesive layer perpendicularly to its two-dimensional extent.

16. Use according to any of Claims 9 to 15,
**characterized in that** the at least one thread has a thickness of between 10 µm and 60 µm.

17. Use according to any of Claims 9 to 16,
**characterized in that** the channel element is so formed as to have permanently a hollow space adapted for the transport of fluid.

## Revendications

1. Couche adhésive collante sans bulles, comprenant une composition adhésive et un élément de canal,
l'élément de canal étant réalisé de manière à présenter au moins temporairement une cavité adaptée pour le transport de fluide,
l'élément de canal comprenant à cet effet une structure à fils avec au moins un fil,
l'élément de canal et la structure à fils étant orientés essentiellement parallèlement à l'étendue de la surface de la couche adhésive, et
une partie de la surface de la structure à fils formant une partie de la surface du côté de la couche adhésive qui est la surface adhésive collante sans bulles de la couche adhésive,
**caractérisée en ce que**
la cavité est disposée à chaque fois à l'intérieur de l'au moins un fil.

2. Couche adhésive selon la revendication 1,
**caractérisée en ce que**
l'au moins un fil présente, perpendiculairement à la direction principale du fil, à chaque fois au moins une ouverture avec une composante radiale, qui relie l'extérieur du fil à la cavité à l'intérieur du fil.

3. Couche adhésive selon la revendication 1 ou 2, **caractérisée en ce que** l'au moins un fil est complètement exposé sur toute son étendue longitudinale le long de la direction principale du fil.

4. Couche adhésive selon l'une quelconque des revendications précédentes, **caractérisée en ce que** l'au moins un fil comprend à chaque fois un filament unique, ou **en ce que** l'au moins un fil comprend à chaque fois plusieurs filaments.

5. Couche adhésive selon l'une quelconque des revendications précédentes, **caractérisée en ce que** la structure à fils comprend plusieurs fils, de préférence **en ce que** la structure à fils présente des croisements de fils et les fils présentent une épaisseur comprise entre 3% et 55% de l'épaisseur moyenne de la couche adhésive perpendiculairement à l'étendue de sa surface.

6. Couche adhésive selon l'une quelconque des revendications précédentes, **caractérisée en ce que** la structure à fils est réalisée sans croisements de fils et l'au moins un fil présente une épaisseur comprise entre 6% et 110% de l'épaisseur moyenne de la couche adhésive perpendiculairement à l'étendue de sa surface.

7. Couche adhésive selon l'une quelconque des revendications précédentes, **caractérisée en ce que** l'au moins un fil présente une épaisseur comprise entre 10 µm et 60 µm.

8. Couche adhésive selon l'une quelconque des revendications précédentes, **caractérisée en ce que** l'élément de canal est réalisé de manière à présenter en permanence une cavité adaptée au transport de fluide.

9. Utilisation d'une couche adhésive, en particulier selon l'une quelconque des revendications précédentes, pour fabriquer un collage sans bulles,
la couche adhésive collante sans bulles présentant une composition adhésive et un élément de canal,
l'élément de canal étant réalisé de manière à présenter au moins temporairement une cavité adaptée pour le transport de fluide,
l'élément de canal comprenant à cet effet une structure à fils avec au moins un fil,
l'élément de canal et la structure à fils étant orientés essentiellement parallèlement à l'étendue de la surface de la couche adhésive, et
une partie de la surface de la structure à fils formant une partie de la surface du côté de la couche adhésive qui est la surface adhésive collante sans bulles de la couche adhésive.

10. Utilisation selon la revendication 9, **caractérisée en ce que** la cavité est disposée à chaque fois du côté extérieur de l'au moins un fil.

11. Utilisation selon la revendication 10,
**caractérisée en ce que** la cavité, lors de l'application de la couche adhésive sur le substrat, est formée à chaque fois entre la couche adhésive et le substrat.

12. Utilisation selon l'une quelconque des revendications 9 à 11, **caractérisée en ce que** l'au moins un fil est complètement exposé sur toute son étendue longitudinale le long de la direction principale du fil.

13. Utilisation selon l'une quelconque des revendications 9 à 12, **caractérisée en ce que** l'au moins un fil comprend à chaque fois un filament unique ou **en ce que** l'au moins un fil comprend à chaque fois plusieurs filaments.

14. Utilisation selon l'une quelconque des revendications 9 à 13, **caractérisée en ce que** la structure à fils comprend plusieurs fils,
de préférence **en ce que** la structure à fils présente des croisements de fils et les fils présentent une épaisseur comprise entre 3% et 55% de l'épaisseur moyenne de la couche adhésive perpendiculairement à l'étendue de sa surface.

15. Utilisation selon l'une quelconque des revendications 9 à 14, **caractérisée en ce que** la structure à fils est réalisée sans croisements de fils et l'au moins un fil présente une épaisseur comprise entre 6% et 110% de l'épaisseur moyenne de la couche adhésive perpendiculairement à l'étendue de sa surface.

16. Utilisation selon l'une quelconque des revendications 9 à 15, **caractérisée en ce que** l'au moins un fil présente une épaisseur comprise entre 10 µm et 60 µm.

17. Utilisation selon l'une quelconque des revendications 9 à 16, **caractérisée en ce que** l'élément de canal est réalisé de manière à présenter en permanence une cavité adaptée au transport de fluide.
